Europäisches Patentamt

**European Patent Office**

Office européen des brevets

(11) Publication number: **0 142 787**
**A2**

(12) # EUROPEAN PATENT APPLICATION

(21) Application number: **84113513.0**

(22) Date of filing: **09.11.84**

(51) Int. Cl.⁴: **F 16 K 15/18**

(30) Priority: **11.11.83 AU 2349/83**

(43) Date of publication of application:
**29.05.85 Bulletin 85/22**

(84) Designated Contracting States:
**AT BE DE FR GB IT NL SE**

(71) Applicant: **Hillier, Raymond Garnet**
**40 Anglers Esplanade**
**Runaway Bay Queensland 4216(AU)**

(71) Applicant: **Hillier, Elizabeth Jean**
**40 Anglers Esplanade**
**Runaway Bay Queensland 4216(AU)**

(72) Inventor: **Hillier, Raymond Garnet**
**40 Anglers Esplanade**
**Runaway Bay Queensland 4216(AU)**

(72) Inventor: **Hillier, Elizabeth Jean**
**40 Anglers Esplanade**
**Runaway Bay Queensland 4216(AU)**

(74) Representative: **Brown, John David et al,**
**FORRESTER & BOEHMERT Widenmayerstrasse 4/I**
**D-8000 München 22(DE)**

(54) A valve for use with hydraulic ram assemblies.

(57) This invention relates to a valve suitable for location within a passage or bore of a piston or piston rod of a hydraulic ram assembly. The valve includes a valve body mountable in the bore or passage and a chamber provided in the valve body having a pair of fluid access ports preferably having a relatively narrow outer passage and an enlarged inner space which may function as a valve seat. There is also provided a pair of valve members wherein each valve member may co-operate with a respective valve seat to close or open same to fluid flow through the valve chamber. The arrangement is such that in operation fluid flow into the valve chamber may occur only from the pressure side of a piston or piston rod accommodating the rod through a proximal access port wherein a distal access port is closed whereby prior to impact of the piston upon an end of an associated hydraulic cylinder the distal access port is opened to permit fluid flow to occur therethrough to the non pressure side of the piston from the valve chamber.

0142787

THIS INVENTION relates to a valve for use with hydraulic ram assemblies and in particular to a valve for use in inhibition of fluid bypass through the piston especially when a plurality of hydraulic ram assemblies are connected in series.

When a plurality of hydraulic ram assemblies are connected in series with a conduit interconnecting an outlet port of a respective hydraulic ram assembly to an inlet port of an adjacent hydraulic ram assembly effective operation of the plurality of hydraulic ram assemblies can be adversely effected if bypass of hydraulic fluid occurs past the piston seals or for any other reason bypass or leakage of fluid may occur between the pressure side of the piston and the non-pressure side. This means that the relative positions of the respective pistons in each hydraulic cylinder can alter and thus proper and effective sequencing of fluid flow between adjoining pistons is impaired.

Fluid leakage or bypass through the piston may occur through mechanical reasons, seal faults, or excess pressure being applied.

Various attempts have been made to solve this particular problem and they have included the provisions of grooves in the internal surface of the hydraulic cylinder wherein fluid may pass through or pass the piston connecting both sides during piston movement. There has also been the provision of check valves located in the piston or piston rod which are operated by spring loading or which alternatively are pushrod actuated but such check valves may only open in a direction opposing pressure thus allowing an interchange of fluid between the non-pressure side and the pressure side of the piston. However the major problem with these remedies was that fluid bypass still had a tendency to occur when the piston changed direction after reaching one end of the hydraulic cylinder from either a shock loading, or through an intentionally high operational loading or until the pushrod

2.

has ceased to contact the end of the hydraulic cylinder. Thus under these conditions the sudden or abrupt change in direction of the piston in the cylinder was responsible for reverse flow or bypass of fluid to occur from the non-pressure side of the piston to the pressure side before and/or after impact or contact with the pushrod and cylinder end.

In the case of a check valve or spring loaded ball valve under high load conditions, often the ball was separated from its accommodating seat before and/or after impact and thus fluid leakage could occur.

It also had to be borne in mind in regard to the check valves described above that they were ineffective in preventing fluid bypass through the piston or piston rod from the pressure side to the non-pressure side.

It is therefore an object of the invention to provide a valve for use in hydraulic ram assemblies capable of alleviating fluid leakage or bypass through the piston and thus minimizing the problems associated with the prior art.

The valve of the invention is suitable for location within a passage or bore of a piston or piston rod of a hydraulic ram assembly and includes:

a valve body mountable in said bore or passage;

a chamber provided in said valve body having a pair or fluid access ports; and

a pair of valve members wherein each valve member is associated with a respective access port to close or open same to fluid flow through the valve chamber whereby in operation fluid flow into said chamber may occur only from the pressure side of a piston or piston rod accommodating said valve through a proximal access port wherein a distal access port is closed whereby prior to impact of said piston upon an end of an associated hydraulic cylinder said distal access port is opened to permit fluid flow to occur therethrough to the non-pressure side of the piston from said valve chamber.

3.

The invention also includes within its scope a hydraulic ram assembly incorporating said valve.

Preferably the valve body is substantially cylindrical although it may comprise any suitable shape. Suitably it may be integral, or more preferably formed from two abutting components including a non-threaded or plain component which is permanently mounted in the bore in the piston and a threaded component mounted in the bore for releasable disengagement therefrom when required for maintenance purposes.

The valve chamber again may comprise any suitable shape but suitably it is elongate and has opposed restricted end portions. Preferably each access port is provided in each end portion.

Suitably each access port is relatively narrow adjacent an associated end of the piston and also includes an enlarged space remote from said end which may function as a valve seat as hereinafter described.

Each valve member suitably comprises a T shaped member with the head of the T occuyping the enlarged space of the access port and the shank of the T occupying the narrow space of the access port with an outer or free end of the shank extending outwardly from the access port into the interior of the hydraulic cylinder. Thus in this embodiment the enlarged space of the access port functions as a valve seat for the head of the T shaped member.

Preferably there is provided biasing means associated with each valve member whereby each valve member is biassed to the closed position where the valve member is retained within its accommodating valve seat.

In a more preferred form of the invention there is provided a spring which is suitably a helical compression spring which extends between each valve member and thus provides a single biasing means for each valve member although separate biasing means for each valve member could be utilized if required.

4.

More preferably however there is provided a pair of balls located in the valve chamber wherein each ball is retained in an accommodating seat portion of the valve chamber. Each ball may be located at each end of a suitable resilient cage such as a helical compression spring and in the closed position abuts the head of an adjacent T shaped valve member as described above.

There also may be provided a resilient member such as a rubber insert which is located and retained in the resilient cage. This is useful for preventing "hydraulic lock" occurring under abnormal working conditions where the pressure in the chamber may exceed the pressure in the hydraulic cylinder. In this situation, both steel balls may be held fast against their accommodating seats. In this situation the resilient member may deform and thus decrease the chamber pressure and thus release the valve chamber from a "hydraulic lock" situation. Suitably the resilient member is securely retained in the helical spring to prevent it becoming loose and lodging in a valve seat.

Reference may now be made to a preferred embodiment of the invention as shown in the accompanying drawings which illustrates a valve constructed in accordance with the invention wherein:

FIG 1 represents a cross-sectional view of the valve located in a piston in a hydraulic ram assembly;

FIGS 2a-2h illustrate various stages in the method of operation of the valve;

FIGS 3a-3f illustrate various shapes applicable to the T-shaped valve member and accommodating valve seat; and

FIG 4 represents a modified valve constructed in accordance with the invention.

In the drawings there is shown hydraulic cylinder 10 having side wall 11 and end wall 12 which includes drain or fill passage 13. There is also shown piston 14 which is attached to piston rod or shaft 15. Also shown is piston rod bush 16 which includes drain and fill passage 17. Piston rod bush 16 also includes recess 18 and end wall 12 may also include recess 19.

There is provided in piston 14 a bore 20 having a tapered portion 21. Bore 20 also includes a threaded portion 22 and a non-threaded portion 23.

There is also shown valve body 24 comprising plain or unthreaded component 25, of complementary dimensions to portion 23, and threaded component 26 which is releasably engaged with bore 20 at portion 22.

Component 25 may be permanently retained and pressure sealed in portion 23 of bore 20 by the use of bonding agent which is suitably applied in the region of tapered portion 21. Tapered portion 21 facilitates the retention of component 25 in portion 23 as shown.

There is also shown valve chamber 27 having tapered portions 28 which act as seats for balls 29A and 29B. There are also shown access ports 30 and 31, each having enlarged spaces 32 and 33 and narrow spaces or passages 34 and 35. Also shown are valve members 36 and 37 having head portions 38 and 39 and shanks 40 and 41. Spaces 32 and 33 act as valve seats for head portions 38 and 39 respectively. Each shank 40 and 41 includes an outwardly extending end portion 42 and 43 respectively and a weakening groove 37A. Each end 42 and 43 extends into the interior space of hydraulic cylinder 10. For convenience the space adjacent rod bush 16 is designated 38A and the space adjacent wall 12 is designated 38B.

There is also shown helical compression spring 43A interposed between balls 29A and 29B as shown.

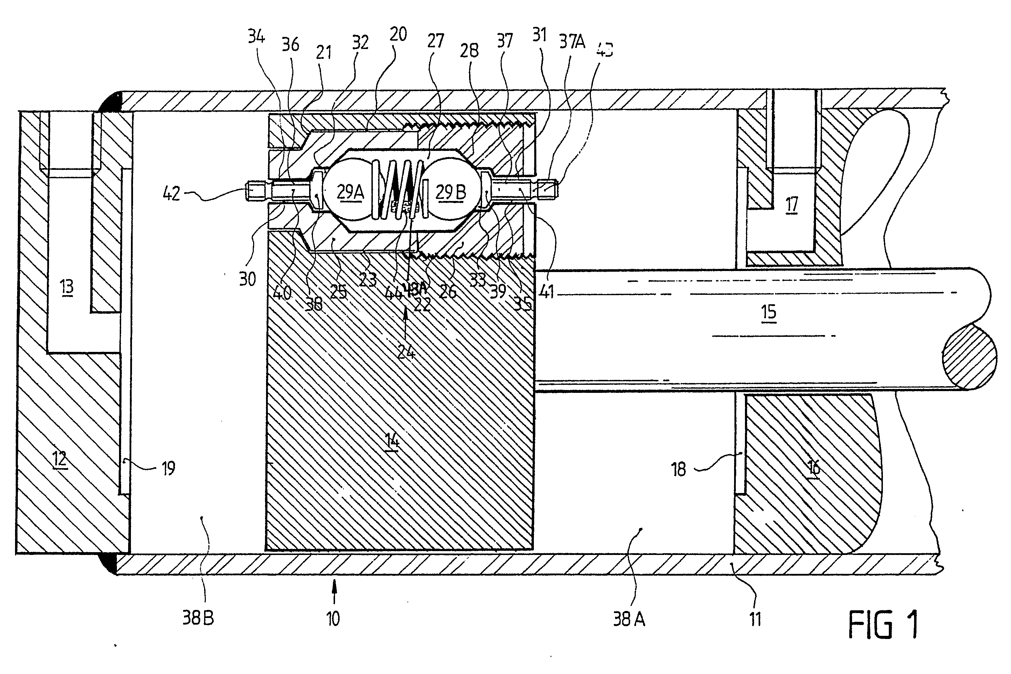

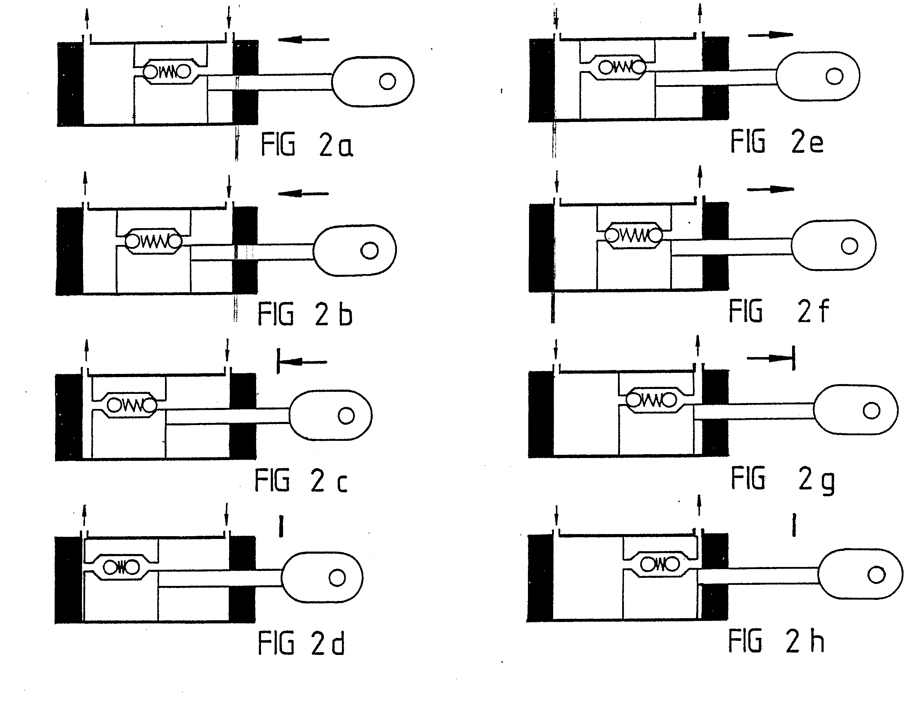

As illustrated in FIGS 2a-2h the valve shown in FIG 1 will function as hereinafter described.

On a forward stroke of the piston access port 30 is closed with ball 29A hard against its associated seat. Access port 31 will normally be closed. However due to a sudden loading on the piston the pressure on the pressure side in space 38A may exceed the pressure in chamber 27 and hence ball 29B may unseat allowing fluid to again access to chamber 27 through port 31. This is shown in FIG 2a. Upon relaxation of the loading on the pressure side ball 29B may close access port 31. This is shown in FIG 2b.

FIG 2c shows the situation wherein the portion 42 of valve member 36 impacts upon end wall 12 of cylinder 10. Therefore ball 29A unseats allowing fluid already in the chamber to flow through to space 38B through access port 30. When this happens the pressure within chamber 27 will be less than in space 38A and ball 29B may also unseat providing a situation when piston 14 impacts against end wall 12 (ie it has stopped) where both access ports 30 and 31 are open. This is shown in FIG 2d.

In FIG 2e space 38B has now become the pressure side of the piston 14 and fluid is entering space 38B through port 13 and draining through port 17. Again due to a sudden loading on the piston ball 29A may unseat allowing fluid to travel from space 38B through port 30 to within chamber 27. Upon relaxation of this loading ball 29A may seat and this is shown in FIG 2f. FIGS 2g and 2h show the situation when piston impacts against rod bush 16 and are a repetition of what has already taken place above concerning FIGS 2c and 2d. Thus projecting end 43 of valve member 37 will impinge upon the end wall of bush 16 and thus ball 29B will unseat allowing fluid within chamber 27 to flow out of the chamber to space 38A. When this happens of course ball 29B will unseat.

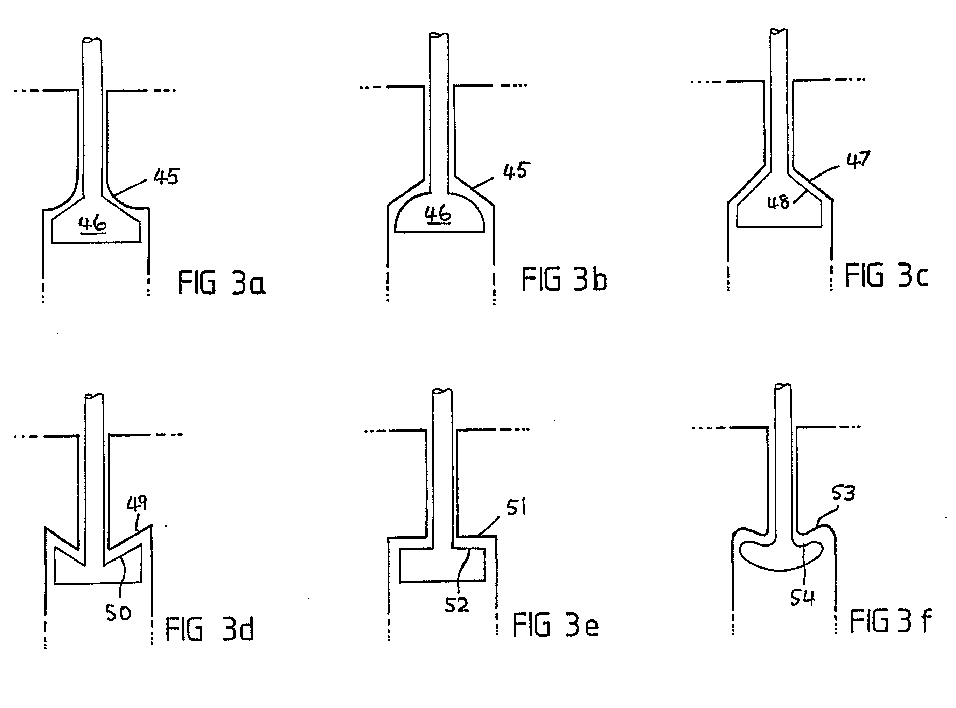

In FIGS 3a-3f there are shown various shapes of the head of a representative T-shaped valve member for use in the invention as well as a valve seat which will have a corresponding shape. Thus the valve seat 45 may be curved as shown in FIG 3a and the head 46 of the T shaped member angled as shown. The reverse is shown in FIG 3b. FIB 3c shows the situation where both the head of the T shaped member and the valve seat are angled having a pair of mutually parallel faces 47 and 48. FIG 3d shows the situation where

7.

both the T shaped member and valve seat have mating reentrant portions 49 and 50. In FIG 3e there are shown mating
square faces 51 and 52 and in FIG 3f there is shown mating
curved portions 53 and 54.

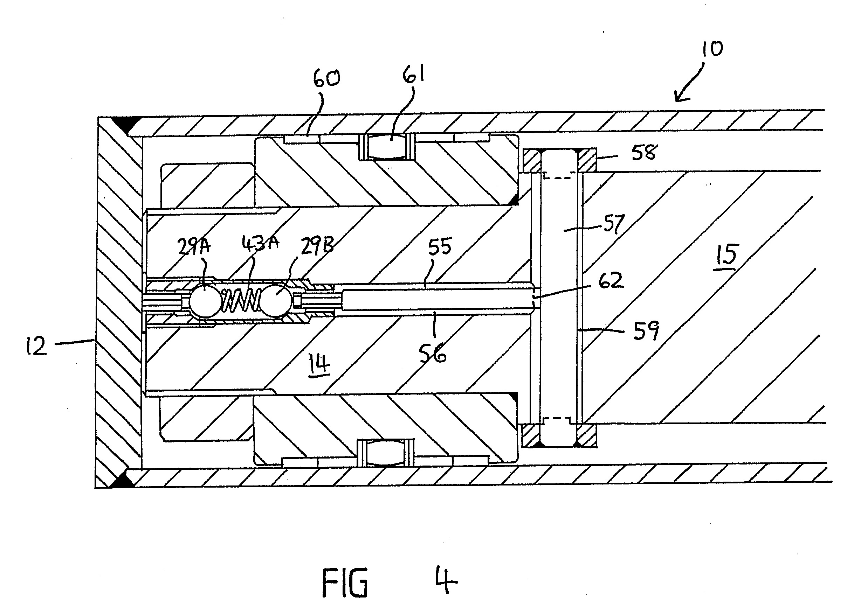

In FIG 4 a modified valve member is shown which is
constructed in accordance with the invention. In this arrangement similar reference numerals have been used as already
described in FIG 1 and thus have the same meanings. However
projecting end 43 is provided with a longitudinal extension
55 which extends through a mating passage 56 in piston 14.
There is also shown a lateral cross member 57 attached to or
integral with longitudinal extension 55 to which is attached
a collar 58 spaced from piston 14 as shown.

In operation of this arrangement when collar 58 impacts
against bush 16 spring 43A will be depressed and thus ball
29B will unseat. Lateral cross member 57 is spaced from
piston 14 as shown within a mating passage 59 so that upon
impact of collar 58 against bush 16 cross member 57 will
abut piston 14 to thereby unseat ball 29B.

In another variation of this arrangement longitudinal
extension 55 may act as a pushrod and extend into passage 59
spaced from cross member 57 and this arrangement is shown
in dotted outline in FIG 4 at 62.

Also shown in FIG 4 is wear ring 60, "J" seal and
back up rings 61.

Thus it will be appreciated that in either a forward
or reverse stroke having regard to the drawings the distal
access port relative to the pressure side of the piston will
be closed and the proximal access port open in normal
operation and also under high load conditions therefore
effectively eliminating bypass or leakage of fluid through
or via the piston.

In the illustrated embodiment above, the hydraulic
ram assembly has been of the double acting sequencing variety.
However in the case of a single acting sequencing hydraulic ram, one of ends 42 or 43 may be severed at weakening groove 37A and thus ball 29A or 29B will be permanently held in its seat as is the case with the valve member 36 or 37. Since in the case of a single acting sequencing hydraulic ram assembly the pressure side will always remain on the same side of the piston, fluid leakage past the piston is still effectively prevented.

There is also shown rubber element 44 retained within spring 43A which deforms under "hydraulic shock" conditions as previously described and thus this will ensure that one of the access ports will always be open for the valve to operate effectively while under hydraulic pressure.

The features disclosed in the foregoing description, in the following claims and/or in the accompanying drawings, may, both separately and in any combination thereof, be material for realising the invention in diverse forms thereof.

1.  A valve suitable for location within a passage or bore of a piston or piston rod of a hydraulic ram assembly, said valve including:
    a valve body mountable in said bore or passage;
    a chamber provided in said valve body having a pair of fluid access ports; and
    a pair of valve members wherein each valve member is associated with a respective access port to close or open same to fluid flow through the valve chamber whereby in operation fluid flow into said chamber may occur only from the pressure side of a piston or piston rod accommodating said valve through a proximal access port wherein a distal access port is closed whereby prior to impact of said piston upon an end of an associated hydraulic cylinder said distal access port is opened to permit fluid flow to occur therethrough to the non pressure side of the piston from said valve chamber.

2.  A valve as claimed in claim 1 wherein the valve body includes two abutting components comprising a non-threaded component bonded or permanently mounted in said bore or passage and a threaded component mounted in the bore for releasable disengagement therefrom.

3.  A valve as claimed in claim 1 or 2 wherein the valve chamber is elongate having opposed restricted end portions each of which comprise part of a respective access port.

4.  A valve as claimed in claim 3 wherein each access port includes a relative narrow outer passage and an enlarged inner space which functions as a valve seat for an associated valve member.

5.  A valve as claimed in claim 4 wherein each valve member is T shaped with the head of the T occupying a respective enlarged inner space and the shank of the T extending through a respective narrow outer passage and projecting outwardly therefrom when the head
of the T abuts said valve seat.

6. A valve as claimed in any preceding claim wherein
there is provided biasing means interposed between
each valve member whereby each valve member is
biassed outwardly or to a closed position.

7. A valve as claimed in claim 6 wherein said biassing
means includes a helical compression spring.

8. A valve as claimed in claim 7 wherein there is
provided a pair of balls in the valve chamber located
between each end of the spring and an associated
head of the T shaped valve member.

9. A valve as claimed in claim 8 wherein there is
provided a resilient insert located and retained
within the spring to deform same and thus decrease
the valve chamber pressure to release each ball
from a locked position in a "hydraulic lock"
situation.

10. A valve as claimed in any preceding claim wherein
one of the projecting ends of the stem of the
T comprises a longitudinal extending part which
is retained within an accommodating passage of the
piston and there is further provided a lateral cross
member associated with said longitudinal extending
part which extends through a transverse passage
located within said piston rod and spaced therefrom
with the ends of said lateral cross member being
associated with an external collar surrounding the
piston rod wherein said lateral cross member may impact
against said transverse passage to thereby open a
proximal access port when said external collar abuts
a rod bush or wall of said hydraulic cylinder.

11.

FIG 1

FIG 2e

FIG 2f

FIG 2g

FIG 2h

FIG 2a

FIG 2b

FIG 2c

FIG 2d

FIG 3a

45

46

FIG 3b

45

46

FIG 3c

47

48

FIG 3d

49

50

FIG 3e

51

52

FIG 3f

53

54

0142787

FIG 4